**Europäisches Patentamt**

**European Patent Office**

**Office européen des brevets**

(19)

(11) Publication number: **0 384 901**
**A1**

(12) # EUROPEAN PATENT APPLICATION

(21) Application number: **90830060.1**

(51) Int. Cl.5: **F04D 29/26, F16B 2/24**

(22) Date of filing: **19.02.90**

(30) Priority: **21.02.89 IT 50889 U**

(43) Date of publication of application:
**29.08.90 Bulletin 90/35**

(84) Designated Contracting States:
**DE ES FR**

(71) Applicant: **BBS- S.p.A.**
**Via Jesina Zona Ind. Cerretano**
**I-60022 Castelfidardo(IT)**

(72) Inventor: **Marra, Ivo**
**Via Bramante**
**Castelfidardo(IT)**

(74) Representative: **Baldi, Claudio**
**Piazza Ghislieri, 3**
**I-60035 Jesi (Ancona)(IT)**

(54) **Rotor for exhaust devices whose boss is fixed to the relevant support pin by means of a cylindrical helical spring.**

(57) This patent application for an industrial utility model concerns an exhaust device rotor (1) whose boss (1a) is fixed to the motor shaft (2) by means of a standard helicoidal cylindrical spring (3).

FIG. 4

### Exhaust device rotor whose Boss is Fixed to the Support Pin by means of a Cylindrical Helicoidal Spring.

This patent application concerns an industrial utility model for an exhaust device rotor whose boss is fixed to the motor shaft by means of a helicoidal cylindrical spring.

In order to better illustrate the advantages of the model according to the invention, mention shall be made of the method currently used to fix rotors to the motor shaft, like those used in exhaust systems installed in hoods of sectional kitchens fitted over the cooking hob, for drawing and expelling outside, or alternatively for filtering, fumes, vapors and smells which form when cooking food.

These rotors consist basically of a cylindrical cage whose only base supports a series of annular peripheral tabs positioned with their longitudinal axis parallel to the longitudinal axis of the rotor which is fitted with a boss at the center into which the end section of the motor shaft is fitted and fixed.

These tabs are shaped and positioned to create a flow of drawn air which passes the same radially from inside towards outside when the rotor rotates around its longitudinal axis.

According to an initial construction design currently in use, these rotors are fixed to the motor shaft by means of a brass boss which is embedded at the center of the back wall of the rotor when the same is moulded, and which is usually made of plastic.

A collar with external threading and several longitudinal grooves the same providing a degree of elastic deformability, projects axially from this metal boss.

The shaft, inside the brass boss, is fixed by means of a nut which is screwed externally to the above flexible to collar, and is tightened progressively around the shaft pin.

Although this construction solution is valid and reliable, it involves fairly high production costs, since it requires the use of a brass boss with relative nut, but above all it involves a complicated moulding technique for the rotor since this brass boss must be embedded at the center of the back wall of the rotor.

In order to simplify and consequently reduce the costs of this splining method, the technicians in the sector have designed and produced another version whereby a plastic boss having a collar with several grooves around the diameter to make the same flexiblity, is fixed directly to the bottom of the rotor.

In this case the hold is by means of a cylindrical metal ring with a longitudinal through cut to make the same elastic, which makes it possible to widen the ring to fit the same outside the above plastic collar which is fixed around the shaft pin after the elastic return of the metal ring encircling it.

The fixing pressure exercised by the cylindrical metal ring is not however sufficient to guarantee a satisfactory hold between the boss and the pin to ensure constant drive during the twisting movement resulting in the necessity of faceting the internal section of the boss, obviously requiring similar faceting on the shaft pin.

Even if this second technical solution eliminates the brass boss thereby simplifying the moulding of the rotor, it complicates and therefore makes more costly the production of the motor shaft since the pin faceting requires special milling work.

Considering the high production costs of both splining solutions offered and produced to date, the need was felt to design a new solution to the problem in order to considerably reduce the costs for mounting these rotors on the support pins.

The innovation of this invention consists substantially of using a standard helicoidal cylindrical spring to fix the boss on the relevant pin, this helicoidal spring being in fact screwed around the collar of the plastic boss, produced in a single piece with the rotor.

The hold exercised by the cylindrical helicoidal spring is very efficient and more than sufficient to guarantee a stable and safe hold between boss and pin.

In order to avoid the danger of sliding between the boss and the pin, according to the invention, the pin is knurled, an operation which does not affect the production costs appreciably since the same can be carried out when the motor shaft is lathed, contrary to the milling operation required in the above mentioned solution. Finally, it should be noted that the operation required to screw the spring on the boss collar is simplified by the opening of the cylindrical ring, an operation necessary for sliding the boss collar into the fixing ring.

It should also be noted that the helicoidal spring can easily be removed from the collar simply by unscrewing the same, which is undoubtedly easier and faster than the operation required to open and remove the metal ring currently used, which is usually deformed during this operation to the extent that it can not be reused.

For major clarity the description of the invention continues with reference to the enclosed tables which are intended for illustrative purposes and not in a limiting sense, where:

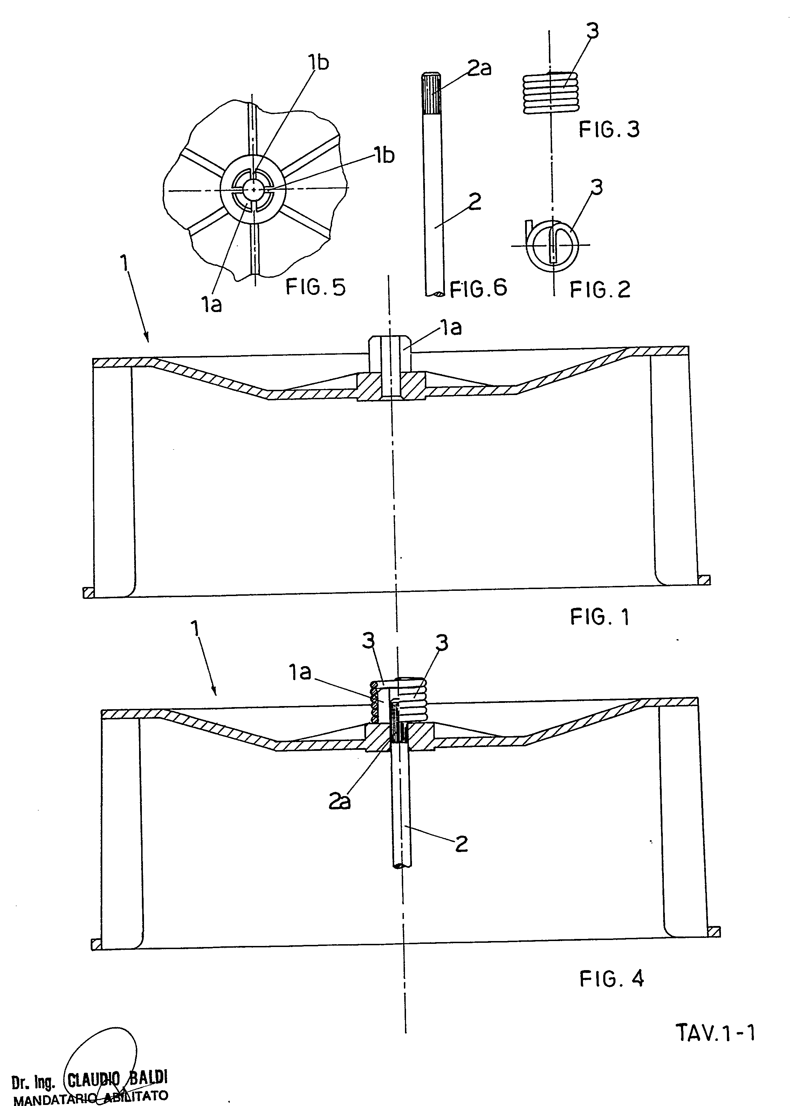

- fig. 1 illustrates an axial cross section of the rotor in question.

- figs. 2 and 3 are two orthogonal illustrations of the cylindrical helicoidal spring used to fix the spring of the rotor on the shaft pin.

- fig. 4 is a half view and half cross section of a rotor fixed to the shaft by means of a cylindrical helicoidal spring, screwed externally to the elastic boss of the rotor.

- fig. 5 is a top view of the rotor boss.

- fig. 6 illustrates the knurled pin of the motor shaft.

The model according to the invention consists of a radial type rotor (1) from whose bottom projects a collar (1a) the same being made elastic by several diameter grooves (1b).

The hold of the collar (1a) around the pin (2a) of the motor shaft (2) occurs, according to the invention, by means of a helicoidal cylindrical screw (3) whose internal diameter must obviously be slightly less than the external diameter of the collar (1a) which is consequently fixed around the pin (2a) by the grip of the spring (3).

The application of the spring (3) on the collar (1a) can easily be carried out simply by screwing the former on the latter since the spring (3), under a light axial push, is rotated at the same time and tends to selfscrew externally to the collar.

In order to ensure that the hold between the boss and pin is as efficient as possible the pin (2a) is knurled, as illustrated in fig. 6.

## Claims

1) An exhaust device rotor whose boss is fixed to the support pin by means of a cylindrical helicoidal spring, consisting of a radial type standard shaped rotor (1), characterized in that it has a boss consisting of a plastic cylindrical collar (1a) moulded in a single piece with the rotor (1), the same being made elastic by several diameter grooves (1b) and which is fixed around the pin (2a) of the motor shaft (2) by means of a helicoidal cylindrical spring (3) which encircles and holds the collar (1a).

2) An exhaust device rotor whose boss is fixed to the relevant support pin by means of a cylindrical helicoidal spring according to claim 1, characterized in that the pin (2a) of the motor shaft (2) is knurled.

FIG. 5

FIG. 6

FIG. 3

FIG. 2

FIG. 1

FIG. 4

TAV.1-1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3692428 (BUBB)<br>* column 1, line 60 - column 2, line 18; figure 3 *<br>--- | 1 | F04D29/26<br>F16B2/24 |
| Y | GB-A-618117 (TECALEMIT)<br>* page 1, lines 8 - 19 *<br>* page 3, lines 46 - 73; figures 1, 5 *<br>--- | 1 | |
| A | US-A-2869651 (ROSE)<br>* the whole document *<br>--- | 1 | |
| A | GB-A-1171961 (SMITHS INDUSTRIES)<br>* the whole document *<br>--- | 1 | |
| A | US-A-3367687 (JENKINS)<br>* column 3, lines 19 - 22; figures 1-3 *<br>----- | 2 | |

TECHNICAL FIELDS
SEARCHED (Int. Cl.5 )

F04D
F16B

The present search report has been drawn up for all claims

| Place of search | Date of completion of the search | Examiner |
|---|---|---|
| THE HAGUE | 29 MAY 1990 | TEERLING J.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P0401)